# EUROPEAN PATENT APPLICATION

(11) **EP 1 429 463 A1**
(43) Date of publication of application: **16.06.2004**
(21) Application number: 01961331.4
(22) Date of filing: 03.09.2001
(51) Int. Cl.: H03M 7/02

(54) **DATA DECODING METHOD**

(71) Applicant: MITSUBISHI DENKI KABUSHIKI KAISHA, Tokyo 100-8310 (JP)
(72) Inventor: UGA, Shinsuke, MITSUBISHI DENKI KABUSHIKI KAISHa, Tokyo 100-8310 (JP)
(74) Representative: Popp, Eugen, Dr.
(86) International application number: PCT/JP2001/007626
(87) International publication number: WO 2003/021792

(57) **Abstract**

In a data transmission method for transmitting circuit-switched or consecutive data or packet-switched data in prescribed transport format(s) along with an identification code (TFCI) indicating the transport format or a combination of the transport formats, the identification code is transmitted between pieces of data, one or more frames ahead of the corresponding data.

## Description

### Technical Field

The present invention relates to data decoding methods, and more particularly to a data decoding method for decoding a Reed-Muller coded TFCI (Transport Format Combination Indicator) sent along with transmitted data in a communication system defined in the 3^{rd} Generation Partnership Project (3GPP).

### Background Art

In the 3GPP-defined communication system, various services have been made transportable to meet various demands in communications. The specifications define transmission rates supporting up to 2 Mbps.

The services range from those for continuous data like voice and moving pictures to those for high-speed packets, and a plurality of such services are multiplexed and transmitted on one or more channels on physical layers (physical channels).

In the 3GPP-defined communication system, to support the communication of various kinds of data as described above, an agreement has been made for the Transport Format Combination Set (TFCS) in the layer-3 messages. Which Transport Format Combination (TFC) among them is to be used for transmission is determined, according to the transfer volume, in the MAC (Medium Access Control) layer being a sub-layer of the second layer on the transmitting side. An indicator of the transport format combination (Transport Format Combination Indicator, TFCI) is transmitted along with the transmitted data.

Based on the transport format selected in the second layer, error correction coding of the transmitted data itself and mapping to a physical channel are carried out. On the receiving side, format conversion from the physical channel to a transport channel and error correction decoding processing should be carried out. As means for recognizing a transport format combination (TFC) used for the relevant transmission, TFCI being sent along with the data is utilized. From this TFCI, the transport format combination set (TFCS) as described above is referred to, and the transport format combination (TFC) is recognized. The format conversion from the physical channel to the channel for transport (transport channel) and the error correction decoding processing are then carried out.

Here, a unit of processing for determination of TFC may differ from a unit of transmission of TFCI. For example, while the transmission unit of TFCI is one radio frame unit (transmission unit on a physical channel), TFC may be determined in two or more radio frame units. In such a case, the same TFCI might be transmitted twice or more times.

Further, while a transport format exists for every transport channel, the respective transport channels may have different processing units. For example, assuming that there are two transport channels, one transport channel A may have a processing unit of two radio frames, while the other transport channel B may have a processing unit of four radio frames. In such a case, the transport format of transport channel A can be changed to a unit of two radio frames, or the transport format of transport channel B can be changed to a unit of four radio frames. At this time, TFCI is changeable in the unit of two radio frames, since TFCI is to be changed in the smallest processing unit among the transport channels.

TFCI completes in one frame, and is sent along with transmitted data. That is, to decide the transport format already indicated by the TFCI, it is necessary to store data and the TFCI in a memory at the same time.

### Disclosure of the Invention

Based on the foregoing, a primary object of the present invention is to provide a data decoding method which allows processing of data at its received timing and reduction of memory size for storage of the data.

The present invention is characterized in that a data decoding method for receiving data and an identification code indicating a transport format of the data and decoding the data based on the identification code includes: a receiving step of receiving the identification code; a discriminating step of discriminating the transport format of the data from the identification code received in the receiving step; and a decoding step of decoding data received after the receiving step, by the transport format discriminated in the discriminating step.

Since the TFCI is sent one frame ahead of the corresponding data, the transport format indicated by the TFCI is decided before reception of the relevant data. Accordingly, the data can be processed at its received timing, and thus, a memory for storing the data can be reduced.

In the decoding step, the data may be received for decoding in a frame that is at least one frame after a frame in which the identification code was received in the receiving step.

Further, in the decoding step, the data may be received for decoding in a frame that is at least one processing unit of a transport format discriminating process after a frame in which the identification code was received in the receiving step.

The present invention in another aspect is characterized in that a data decoding method for receiving data and an identification code indicating a transport format of the data and decoding the data based on the identification code includes: a receiving step of receiving the identification code; a discriminating step of discriminating the transport format of the data from the identification code received in the receiving step; and a decoding step of decoding the received data by the transport format discriminated in the discriminating step; wherein a reception timing of the data to be decoded based on the discriminated transport format can be changed based on timing information received prior to reception of the relevant data.

The timing information received may be included in the identification code.

Alternatively, the timing information received may be included in the data.

### Brief Description of the Drawings

Figs. 1A-1C are tables illustrating specific examples of sets of transport formats for two channels and an example of a combination set of the relevant transport formats.
Fig. 2 illustrates how TFCI and transport formats are changed with time in the respective transport channels based on the examples shown in Figs. 1A-1C.
Figs. 3A-3C illustrate examples where TFCI are transmitted with, one frame ahead of, or one processing unit ahead of the corresponding data.
Fig. 4 is a block diagram showing an entire configuration of a W-CDMA radio communication terminal device according to an embodiment of the present invention.
Fig. 5 illustrates a configuration of the physical format converting portion on the receiving side shown in Fig. 4.
Fig. 6 is a flowchart illustrating an operation in an embodiment of the present invention.

### Best Modes for Carrying Out the Invention

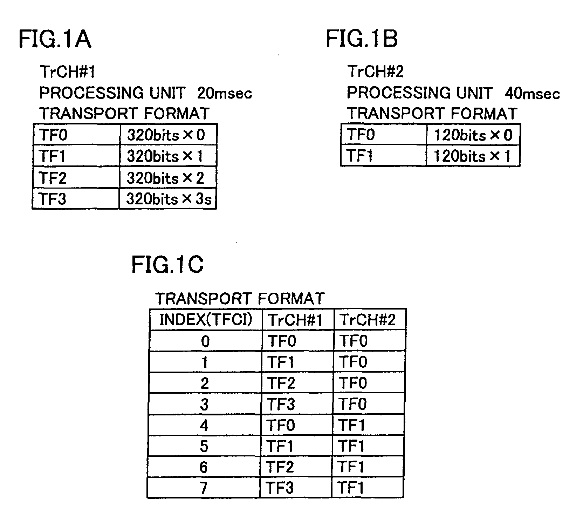

Firstly, TFCI is explained. Here, it is assumed that a plurality of transport channels are multiplexed for transmission on a physical channel. Referring to the examples shown in Figs. 1A-1C, there are two transport channels of transport channel (TrCH) #1 and transport channel #2. Each transport channel has its transmission time interval (processing unit). Transport channel #1 has a processing unit of 20 msec, and transport channel #2 has a processing unit of 40 msec.

In each transport channel, a transport format is defined for a respective transmission time interval. Transport channel #1 has four kinds of transport formats of 320 bits × 0, 320 bits × 1, 320 bits × 2, and 320 bits × 3, as shown in Fig. 1A.

Transport channel #2 has two kinds of transport formats of 120 bits × 0 and 120 bits × 1, as shown in Fig. 1B. As these two transport channels are multiplexed for transmission, there are combinations of the transport formats of the transport channels. Such transport format combinations (TFC) as a set (TFCS) are shown in Fig. 1C.

An identification code indicating the TFC is called a TFCI. TFCI 0 indicates a combination of TF0 (320 bits × 0) as the transport format of transport channel #1 and TF0 (120 bits × 0) as the transport format of transport channel #2. TFCI 5 indicates a combination of TF1 (320 bits × 1) as the transport format of transport channel #1 and TF1 (120 bits × 1) as the transport format of transport channel #2.

Data and TFCI are sent together. In response, on the receiving side, TFCS (the table in Fig. 1C) is referred to from the received TFCI, transport formats of respective transport channels for the data of minimum transmission unit are determined, and format conversion of the data from a physical channel to multiple transport channels and error correction decoding processing are carried out.

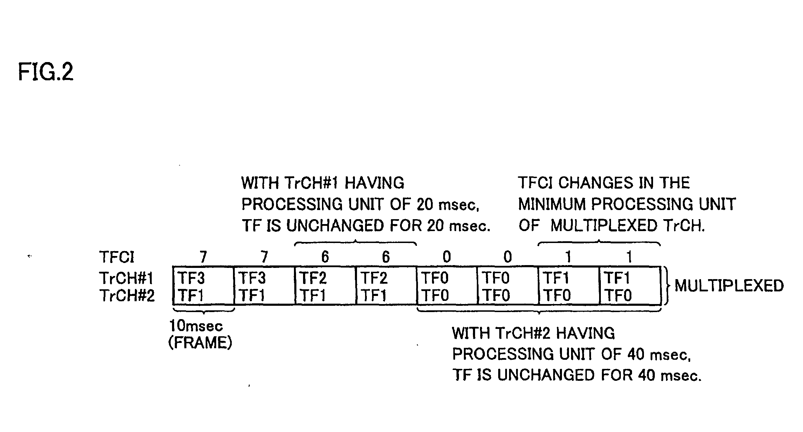

The foregoing is explained in more detail with reference to Fig. 2. Fig. 2 illustrates a case where two transport channels in the examples of Figs. 1A and 1B are multiplexed for transmission for each unit (one radio frame: 10 msec) on a physical channel, with the transport formats being changed.

The transmission time interval (processing unit) of transport channel #1 shown in Fig. 1A is 20 msec, and thus, the same transport format remains for a unit of two radio frames. Similarly, in transport channel #2 having the transmission time interval of 40 msec, the same transport format lasts for a unit of four radio frames. Naturally, TFCI changes at the minimum transmission time interval (20 msec in this case) of the multiplexed transport channels.

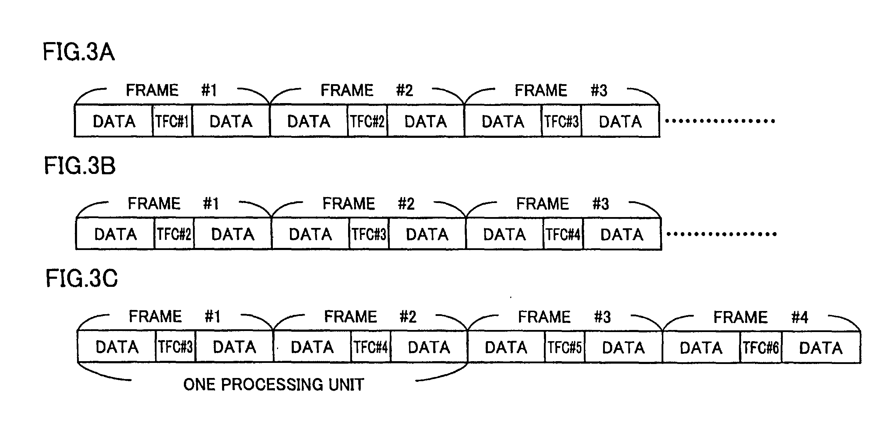

The data transmission method of the present invention is explained in conjunction with Figs. 3A-3C. Fig. 3A illustrates a conventional transmission method, and Figs. 3B and 3C illustrate data transmission methods according to the present invention.

Referring to Fig. 3A, in the conventional transmission method, TFCI #1, #2, #3... are transmitted in frames #1, #2, #3..., between pieces of data corresponding thereto. By comparison, in an example of the present invention shown in Fig. 3B, each TFCI is transmitted one or more frames ahead of the frame in which corresponding data is transmitted. In another example of the present invention shown in Fig. 3C, each TFCI is transmitted one processing unit ahead, the unit being, e.g., 20 msec or 40 msec as explained in conjunction with Figs. 1A and 1B.

In the example shown in Fig. 3B, TFCI#2 corresponding to data transmitted in a transmission period of frame #2 is transmitted in a transmission period of frame #1, and TFCI#3 corresponding to data transmitted in a transmission period of frame #3 is transmitted in the transmission period of frame #2. The subsequent TFCI are each transmitted one frame ahead of a frame in which the corresponding data is transmitted. Although TFCI are transmitted one frame ahead in Fig. 3B, they may be transmitted multiple frames ahead.

Fig. 3C shows the example where TFCI are transmitted one processing unit ahead. This processing unit is a unit of processing for determination of TFC. That is, assuming that one processing unit is formed of frames #1 and #2, TFCI#3 corresponding to the data to be transmitted in frame #3 in the next processing unit is sent along with the data in frame #1.

In the method for transmitting TFCI one frame ahead as in the embodiment described above, TFCI corresponding to the initial transmit format cannot be transmitted in advance. To address this issue, the transmission can be started in accordance with the transmission method as shown in Fig. 3A, and then, TFCI alone, unaccompanied by data, can be transmitted in a certain frame period at a certain point. Thereafter, it becomes possible to send TFCI one frame period or one processing period ahead of the transmitted data. Further, misalignment may occur between transmitted data and TFCI, for example in the case where a number of processing formats is changed on the transmitting side after transmission of TFCI. To address this issue, a communication protocol having a function to allow transmission timings of TFCI and the corresponding data to be changed at a certain timing, may be provided.

In addition, TFCI may be used to notify a change of TFCI transmission timing between the communication parties. That is, formats for notification of a changed timing at which the TFCI is sent prior to the corresponding transmission data, and a number of frames after the change constituting the processing unit of the transport channel, may be added to the TFCI format. Data is non-existent at this time, since data transmission is impossible.

Further, the change notification between the communication parties may be defined as a message for radio communication, and the communication message may be transmitted as transmitted data to notify the change.

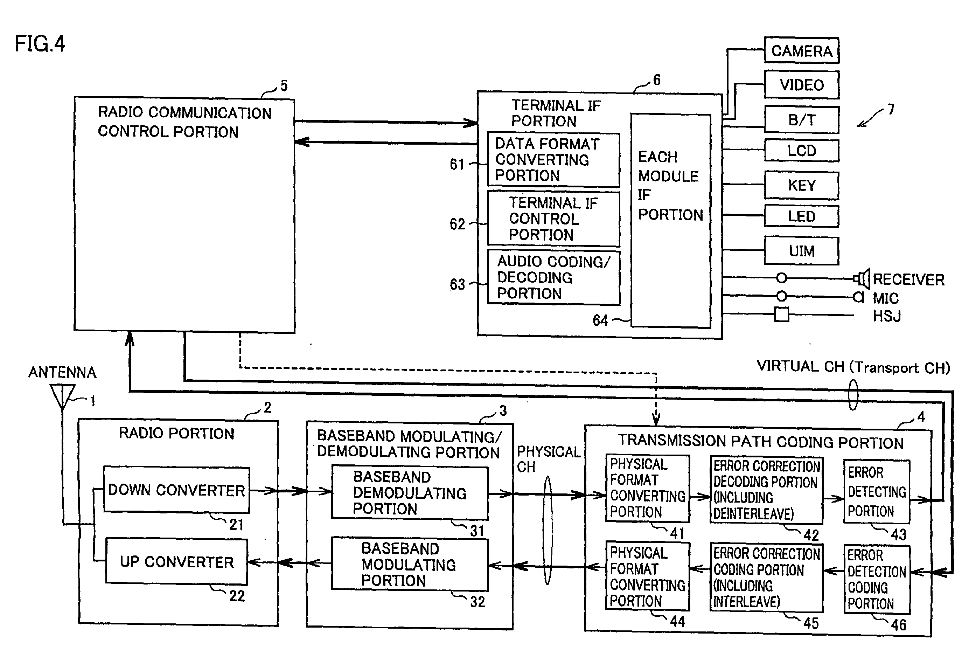

Fig. 4 is a block diagram showing an entire configuration of a W-CDMA radio communication terminal device according to an embodiment of the present invention. Referring to Fig. 4, an antenna 1 is connected to a radio portion 2. Radio portion 2 includes a down converter 21 and an up converter 22. Down converter 21 converts a high-frequency signal of a reception band to a baseband signal, and up converter 22 converts a baseband signal to a high-frequency signal of a transmission band.

A baseband signal modulating/demodulating portion 3 includes a baseband demodulating portion 31 and a baseband modulating portion 32. Baseband demodulating portion 31 performs baseband demodulation on an AD-converted signal down converted in radio portion 2. In the CDMA system, despread modulation, Rake combining and others are carried out. Baseband modulating portion 32 performs baseband modulation on a signal that was subjected to error correction coding and converted to a physical channel in a transmission path coding portion 4. In the CDMA system, spread modulation is carried out.

Transmission path coding portion 4 includes a physical format converting portion 44, an error correction coding portion 45 including interleave, and an error detection coding portion 46 in a transmitting part, and also includes a physical format converting portion 41, an error correction decoding portion 42 including deinterleave, and an error detecting portion 43 in a receiving part.

Physical format converting portion 41 multiplexes and demultiplexes one or more physical channels received to predetermined one or more transport channels. Error correction decoding portion 42 performs error correction decoding on a block of transport channel(s). Error detecting portion 43 performs error detection on the block of transport channel(s) corrected. Error detection coding portion 46 adds an error detection code to a block of one or more transport channels transferred from an upper layer, and error correction coding portion 45 performs error correction coding on the data having the error detection code added thereto. In physical format converting portion 44, one or more transport channels are multiplexed and mapped to one or more physical channels.

A radio communication control portion 5 performs protocol control for the radio communication, control of radio portion 2, baseband modulating/demodulating portion 3 and transmission path coding portion 4 therefor, and communication with a terminal IF portion 6. Terminal IF portion 6 has a module IF function for a user IF of camera, LCD or the like, and includes a data format converting portion 61, a terminal IF control portion 62, an audio coding/decoding portion 63, and each module IF portion 64.

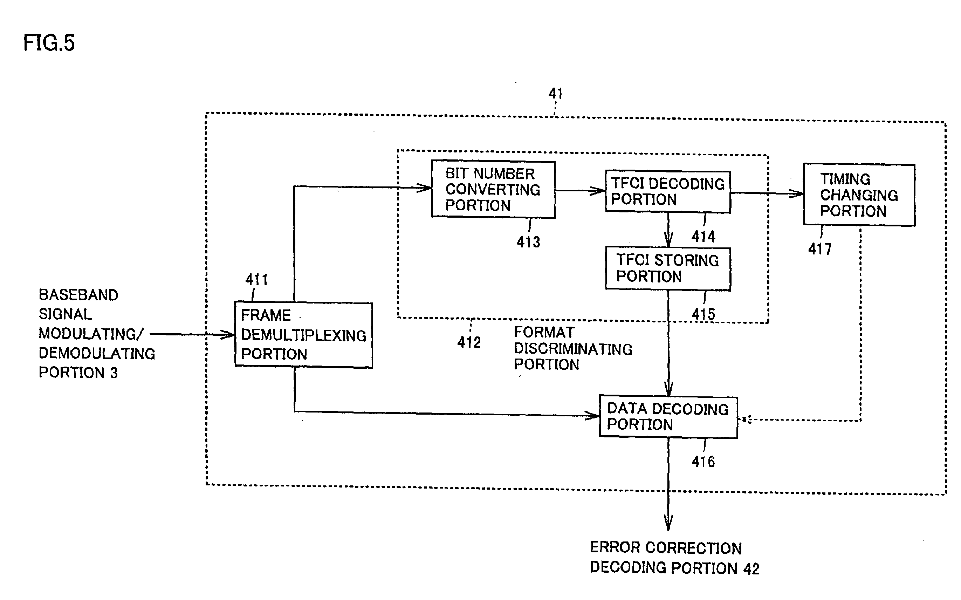

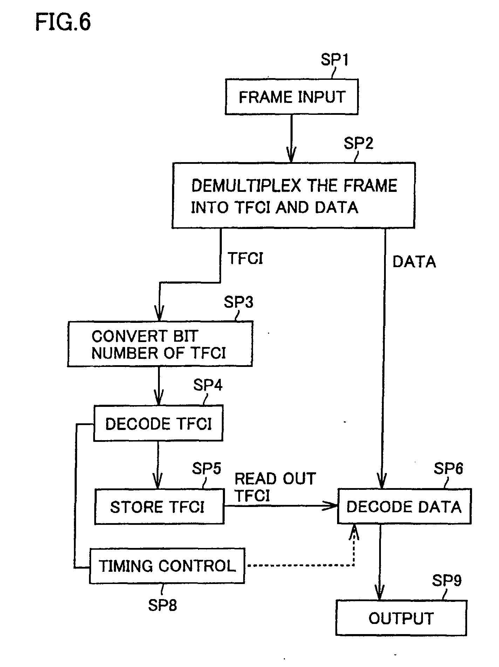

Fig. 5 illustrates a configuration of physical format converting portion 41 on the receiving side shown in Fig. 4. Fig. 6 is a flowchart illustrating an operation of the physical format converting portion 41.

Referring to Fig. 5, physical format converting portion 41 is formed of a frame demultiplexing portion 411, a format discriminating portion 412, a data decoding portion 416, and a timing changing portion 417. Format discriminating portion 412 includes a bit number converting portion 413, a TFCI decoding portion 414 and a TFCI storing portion 415.

The operation of physical format converting portion 41 is now explained. Firstly, in step ("SP" in the drawing) SP1, the frame demodulated in baseband signal modulating/demodulating portion 3 in Fig. 4 is input to physical format converting portion 41. In step SP2, the frame is demultiplexed to TFCI and data in frame demultiplexing portion 411. The TFCI is applied to bit number converting portion 413, and the data is output to data decoding portion 416.

The TFCI transmitted onto a physical channel has been subjected to a repetition or puncturing process of prescribed bit(s) to conform to the format of the physical channel. Bit number converting portion 413 performs the reverse process on the TFCI input in step SP3. The TFCI processed by bit number converting portion 413 is decoded by TFCI decoding portion 414 in step SP4, and stored in TFCI storing portion 415 in step SP5. In step SP6, the TFCI are sequentially read out by data decoding portion 416 for data decoding.

In the present invention, TFCI necessary for decoding data included in a frame has already been received in a frame ahead of the relevant frame. That is, at the time when data is input to data decoding portion 416, the TFCI required for decoding of the relevant data is stored in TFCI storing portion 415. Thus, data decoding portion 416 can quickly read the TFCI necessary for the data decoding out of TFCI storing portion 415, to realize rapid data decoding. A memory for data storage can also be reduced, compared to the conventional device where data should be held in data decoding portion 416 until arrival of TFCI corresponding thereto.

Further, in step SP8 in Fig. 4, timing changing portion 417 shown in Fig. 5 controls the decoding timing in data decoding portion 416 and the TFCI reading timing in data decoding portion 416, based on the timing information received along with the TFCI. Although the case where the timing information is received and decoded together with the TFCI has been described, alternatively, means for controlling the aforementioned timings in data decoding portion 416 based on timing information included in data may be provided.

As described above, according to the embodiments of the present invention, TFCI is transmitted at least one frame or at least one processing unit ahead, and thus, a transport format indicated by the TFCI is decided before reception of data corresponding thereto. Accordingly, the data can be processed at its received timing without delay, and a memory for storage of data can be reduced.

### Industrial Applicability

According to the present invention, a transport format indicated by TFCI is decided before data corresponding thereto is received, since the TFCI is transmitted one frame or one processing unit ahead of the data. This allows processing of data at its received timing, and therefore, the present invention is applicable to a terminal device, such as a mobile handset, performing radio communication.

## Claims

1. A data decoding method for receiving data and an identification code indicating a transport format of the data and decoding the data based on the identification code, comprising:
a receiving step (SP1) of receiving said identification code;
a discriminating step (SP2-SP5) of discriminating the transport format of the data from said identification code received in said receiving step; and
a decoding step (SP6) of decoding data received after said receiving step, by the transport format discriminated in said discriminating step.

2. The data decoding method according to claim 1, wherein said decoding step includes decoding data by receiving the data in a frame that is at least one frame after a frame in which said identification code is received in said receiving step.

3. The data decoding method according to claim 1, wherein said decoding step includes decoding data by receiving the data in a frame that is at least one processing unit of a transport format discriminating process after a frame in which said identification code is received in said receiving step.

4. A data decoding method for receiving data and an identification code indicating a transport format of the data and decoding the data based on the identification code, comprising:
a receiving step (SP1) of receiving said identification code;
a discriminating step (SP2-SP5) of discriminating the transport format of the data from said identification code received in said receiving step; and
a decoding step (SP6) of decoding said received data by the transport format discriminated in said discriminating step;
a reception timing of said data to be decoded based on said discriminated transport format being changeable according to timing information received prior to reception of the data.

5. The data decoding method according to claim 4, wherein said timing information received is included in said identification code.

6. The data decoding method according to claim 4, wherein said timing information received is included in said data.
